# FASCICULE DE BREVET EUROPEEN

(11) **EP 1 571 814 B1**
(45) Date de publication et mention de la délivrance du brevet: **06.04.2011**
(21) Numéro de dépôt: 05075426.6
(22) Date de dépôt: 22.02.2005
(51) Int. Cl.: H04M 3/42, H04M 3/56, H04M 7/00

(54) **Procédé et système de mise en relation téléphonique d'au moins deux personnes**
Verfahren und System zum Aufbau einer Fernsprechverbindung zwischen mindestens zwei Personen
Method and system for establishing a telephonic connection between at least two persons

(30) Priorité: 01.03.2004 FR 0450399
(43) Date de publication de la demande: 07.09.2005
(73) Titulaire: FRANCE TELECOM, 75015 Paris (FR)
(72) Inventeur: Gonzalez, Jean, 06600 Antibes (FR); Bojman, Frédéric, 92150 Suresnes (FR)

(56) Documents cités:
- WO-A-01/31903
- FR-A- 2 608 875
- FR-A- 2 640 451
- US-A1- 2002 122 391

## Description

Le domaine de l'invention est celui des télécommunications entre personnes.

Comme moyens de télécommunications, on connaît la téléphonie qui permet de mettre en relation essentiellement vocale au moins deux personnes dont l'une appelle l'autre par un numéro de téléphone. Ce type de communication effectué grâce à un téléphone fixe ou à un téléphone mobile, permet d'appeler rapidement depuis tout endroit avec un appareil peu encombrant et de se rapprocher virtuellement de la personne appelée dont on reconnaît la voix. Le fait de devoir divulguer son numéro de téléphone pour être appelé, ne permet pas de conserver un réel anonymat.

D'autres moyens de télécommunications prennent en ce moment un essor considérable parmi lesquels on connaît ceux des messageries électroniques qui utilisent les réseaux locaux ou étendus de transmission par paquets tels qu'Internet. On peut citer les messageries électroniques asynchrones dans lesquels le destinataire reçoit son message en différé lorsqu'il se connecte à un serveur et les messageries électroniques synchrones dans lesquelles au moins deux interlocuteurs sont connectés simultanément à un serveur de façon à permettre à un interlocuteur de recevoir instantanément des messages émis par un autre interlocuteur. Certains utilisateurs préfèrent utiliser un pseudonyme pour communiquer à grande échelle tout en conservant l'anonymat nécessaire au maintien de leur vie privée.

Pour de nombreux motifs possibles qui lui sont propres, un utilisateur de messagerie électronique peut souhaiter communiquer par téléphone avec d'autre utilisateurs de messagerie.

Certains services de messagerie électronique instantanée tels que ceux de rencontre sur Internet, permettent de s'échanger des numéros de téléphone par messagerie asynchrone. Ceci présente l'inconvénient de rompre la continuité de service et aussi de divulguer son numéro de téléphone à des personnes a priori encore peu connues.

Certains services de messagerie électronique instantanée encore octroient un numéro de téléphone valable pendant la durée de la session. Cependant ce numéro doit être transmis par l'utilisateur qui ne bénéficie d'aucune automatisation à ce sujet. L'inconvénient est aussi dans la réutilisation possible de ce numéro.

Il est possible d'utiliser un pont de réunion téléphonique grâce à un numéro de téléphone généralement permanent pour la transmission duquel aucun automatisme n'est connu. Le numéro peut être réutilisé et perturber ainsi le service.

La demande de brevet français FR 2 608 875 décrit un système permettant de mettre en relation téléphonique deux interlocuteurs sans qu'aucun d'eux n'ait à donner ses coordonnées téléphoniques.
Cependant, la mise en relation téléphonique prévue dans ce document est subordonnée à une connexion préalable des deux interlocuteurs à un même service de messagerie instantanée, ce qui peut constituer une contrainte d'utilisation prohibitive.

Un besoin se fait sentir pour tirer partie des nombreux moyens de télécommunication offerts aujourd'hui sans souffrir des inconvénient ci-dessus évoqués.

Un premier objet de l'invention est un procédé de mise en relation téléphonique d'au moins deux personnes sans qu'aucune de ces personnes n'ait à donner ses coordonnées téléphoniques. Le procédé est remarquable caractérisé en ce qu'il comprend:
- une étape de transmission à une ou plusieurs personnes invitées, d'un message émis par une personne invitante et contenant une invitation à communiquer par téléphone;
- une étape de création automatique d'un numéro dédié à une communication téléphonique pour laquelle au moins une personne invitée a donné accord;
- une étape de diffusion automatique du numéro dédié à la personne invitante et à la ou aux personnes invitées ayant donné accord;
- une étape de connexion automatique d'au moins deux appels au numéro dédié.

De façon avantageuse, la connexion d'au moins deux appels au numéro dédié, est contrôlée par une validité du numéro dédié dans une plage de temps prédéterminée.

Particulièrement, le numéro dédié est grillé après utilisation.

Un deuxième objet de l'invention est un système de mise en relation téléphonique d'au moins deux personnes sans qu'aucune de ces personnes n'ait à donner ses coordonnées téléphoniques. Le système est remarquable en ce qu'il comprend:
- un serveur de messagerie agencé pour transmettre à une ou plusieurs personnes invitées, un message émis par une personne invitante et contenant une invitation à communiquer par téléphone, pour créer automatiquement un numéro dédié à une communication téléphonique pour laquelle au moins une personne invitée a donné accord et pour diffuser le numéro dédié à la personne invitante et à la ou aux personnes invitées ayant donné accord;
- un commutateur agencé pour connecter au moins deux appels au numéro dédié.

De façon avantageuse, le commutateur est agencé pour contrôler la connexion d'au moins deux appels au numéro dédié, en fonction d'une validité du numéro dédié dans une plage de temps prédéterminée.

Particulièrement, le commutateur est agencé pour griller le numéro dédié après utilisation.

De nombreux détails et avantages de l'invention, ressortent de l'exemple de mise en oeuvre à présent décrite en référence aux dessins annexés dans lesquels:
- la figure 1 est un schéma de système conforme à l'invention;
- la figure 2 montre des étapes de procédé pour partager un numéro de téléphone dédié entre au moins deux utilisateur;
- les figures 3 et 4 montrent des étapes de procédé pour générer et gérer le numéro de téléphone dédié;
- la figure 5 montre des étape de procédé pour établir une communication téléphonique entre au moins deux utilisateurs au moyen du numéro de téléphone dédié.

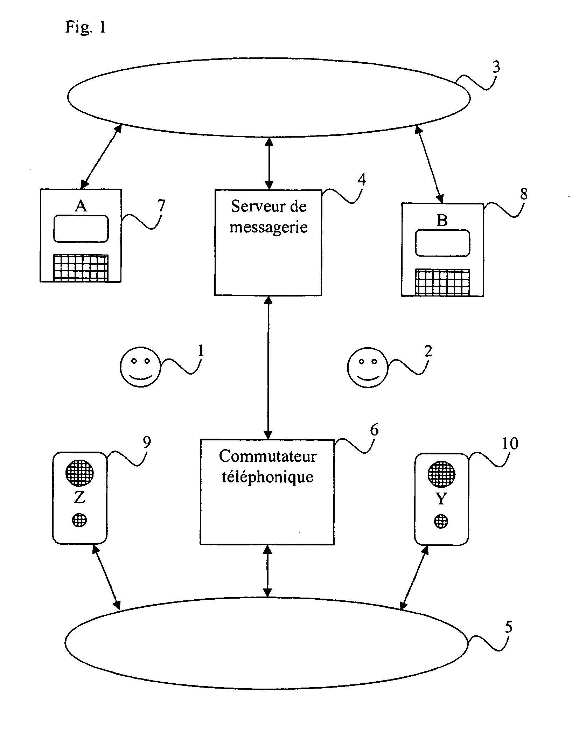

Le système représenté sur la figure 1, comprend un serveur de messagerie 4 et un commutateur téléphonique 6 reliés entre eux par une liaison de communication au moins du serveur 4 vers le commutateur 6 de type point à point ou sur réseau de préférence sécurisé.

Le serveur 4 est du type connu des serveurs de messagerie instantanée (instant messaging), de forum (chatt) ou de messages électroniques (e-mail). Des dispositifs 7, 8, tels que des ordinateurs personnels ou tout autre type d'appareils semblables avec clavier, écran, souris et interface réseau, sont agencés pour se connecter au serveur 4 par un réseau 3 de type Internet ou Intranet.

On sait qu'une application de type messagerie instantanée ou forum est de type synchrone en ce que des utilisateurs 1, 2 connectent leurs dispositifs respectifs 7, 8, dans une plage de temps commune au serveur 4 pour dialoguer essentiellement sous forme texte, à deux en messagerie électronique ou à plusieurs dans un forum.

On sait qu'une application de type messagerie électronique est de type asynchrone en ce que l'utilisateur 1 élabore sur son dispositif 7, un message qu'il adresse à l'utilisateur 2 via une connexion au serveur 4 sur le réseau 3. Le message reste sur le serveur 4 jusqu'à ce que l'utilisateur 2 s'y connecte via le réseau 3.

Le commutateur 6 est du type connu dans les serveurs audiotel ou de téléconférence en étant capable de commuter en une communication directe entre deux utilisateurs 1, 2 ou plus, deux ou plusieurs demi communications initiées respectivement de l'utilisateur 1 et de l'utilisateur 2 vers le commutateur 6.

Le commutateur téléphonique 6 est un noeud de réseau téléphonique 5 qui reçoit des appels qui lui sont adressés en provenance d'appareils téléphoniques 9, 10 connectés au réseau 5. Les appareils téléphoniques 9, 10, sont de type téléphones mobiles, téléphones à domicile avec ou sans fil, téléphones de cabines téléphoniques ou tout autre type d'objet communiquant dotés d'un microphone et d'un haut-parleur. Au moyen des appareils 9, 10, au moins deux utilisateurs 1, 2, peuvent communiquer oralement avec la souplesse que l'on connaît en terme de localisation ou déplacement des utilisateurs.

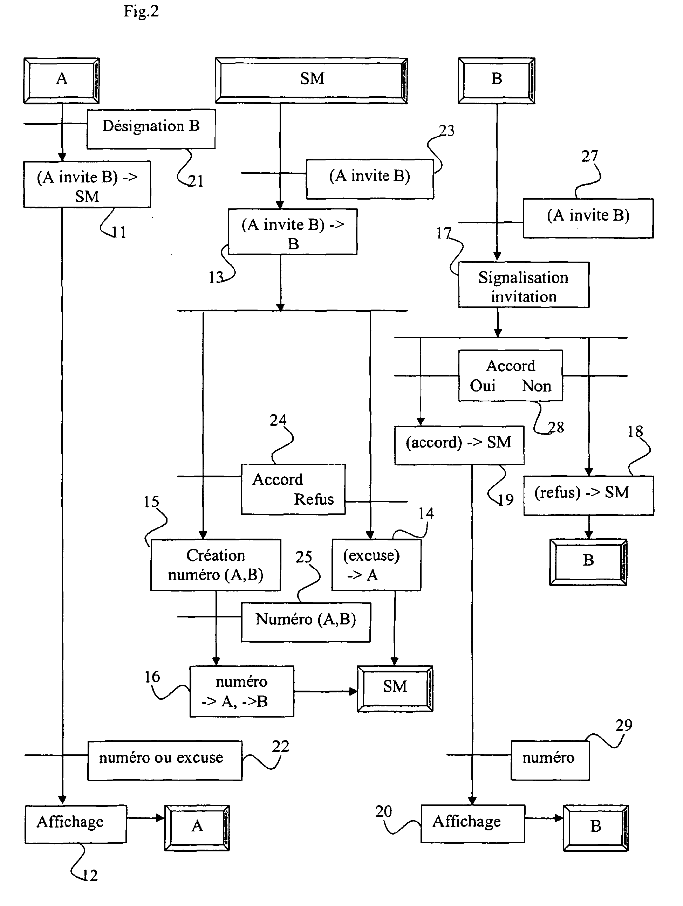

Le serveur de messagerie 4 comprend des moyens agencés pour recevoir une invitation à communication téléphonique entre au moins deux utilisateurs, et pour transmettre aux utilisateurs, un numéro de téléphone dédié à ladite communication téléphonique. Outre les composants habituels de communication sur le réseau 3 pour un serveur tels que cartes réseau avec pilotes appropriés, les dits moyens comprennent essentiellement un programme agencé pour exécuter les étapes de procédé décrites ci-après en référence à la figure 2.

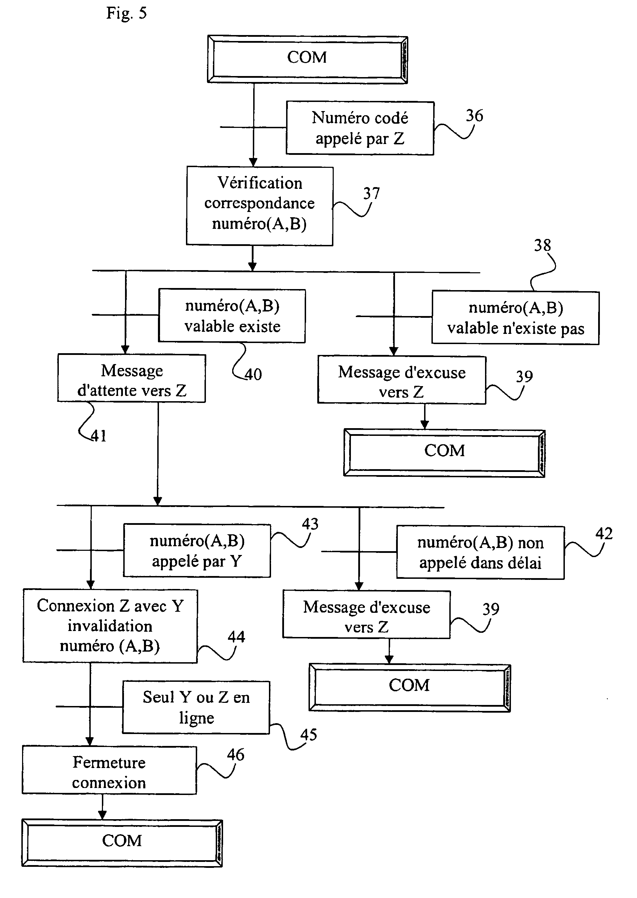

Le commutateur téléphonique 6 comprend des moyens agencés pour gérer une validité de numéro dédié et connecter des appareils téléphoniques qui appellent le numéro dédié sous condition de validité du numéro dédié. Outre les composants habituels de commutation sur un réseau téléphonique, les dits moyens comprennent essentiellement un programme agencé pour exécuter les étapes de procédé décrites ci-après en référence à la figure 5.

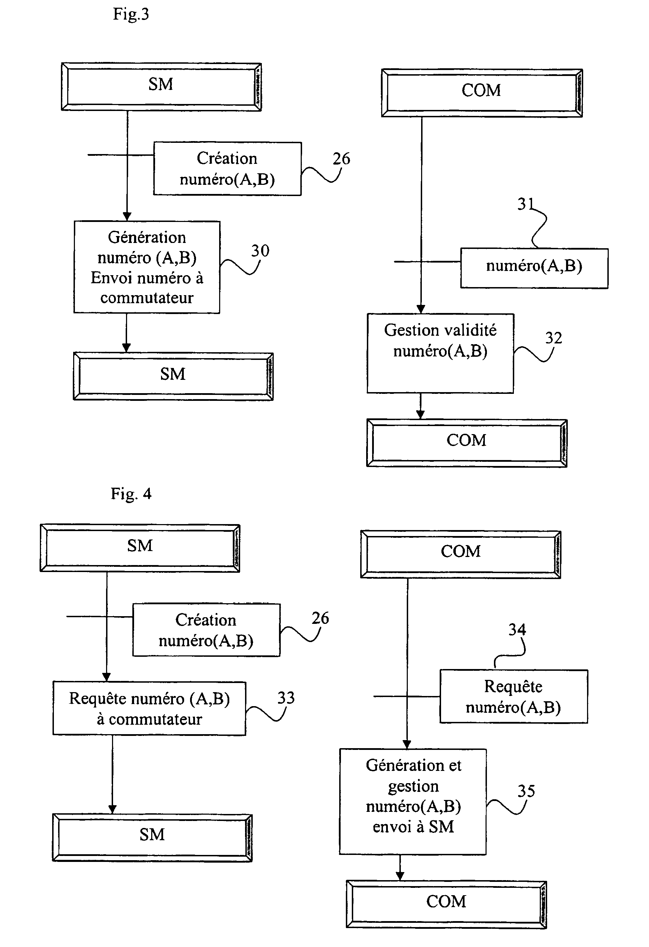

Selon une première variante, le serveur de messagerie 4 comprend des moyens agencés pour générer le numéro dédié et pour envoyer le numéro dédié au commutateur téléphonique 6. Le commutateur 6 comprend alors des moyens de réception du numéro dédié et de ses conditions de validité. Outre les composants habituels de communication du serveur 4 vers le commutateur 6, les dits moyens comprennent essentiellement un programme agencé pour exécuter les étapes de procédé décrites ci-après en référence à la figure 3.

Selon une deuxième variante, le serveur de messagerie 4 comprend des moyens agencés pour générer à destination du commutateur 6, une requête de numéro dédié avec des conditions de validité et pour recevoir le numéro dédié du commutateur téléphonique 6. Le commutateur 6 comprend alors des moyens de réception de la requête avec les conditions de validité et des moyens agencés pour générer le numéro dédié et pour envoyer le numéro dédié au serveur 4. Outre les composants habituels de communication entre le serveur 4 et le commutateur 6, les dits moyens comprennent essentiellement un programme agencé pour exécuter les étapes de procédé décrites ci-après en référence à la figure 4.

En référence à la figure 2, une machine A effectue des étapes 11 à 12 de procédé activées par des transitions 21 à 22, une machine SM effectue des étapes 13 à 16 de procédé activées par des transitions 23 à 25, une machine B effectue des étapes 17 à 20 de procédé activées par des transitions 27 à 29. La machine A est réalisée dans l'un des dispositifs 7, 8 par un ou plusieurs processeurs exécutant un élément de programme chargé en mémoire vive du dispositif considéré pour contrôler et commander les étapes de procédé 11 à 12 prévues pour y être activées. La machine SM est réalisée dans le serveur de messagerie par un ou plusieurs processeurs exécutant un élément de programme chargé en mémoire vive du serveur 4 pour contrôler et commander les étapes de procédé 13 à 16 prévues pour y être activées. La machine B est réalisée dans l'autre des dispositifs 7, 8 par un ou plusieurs processeurs exécutant un élément de programme chargé en mémoire vive du dispositif considéré pour contrôler et commander les étapes de procédé 17 à 20 prévues pour y être activées.

La machine SM est intégrée dans une première partie applicative de messagerie ouverte sur le serveur 4 où elle est par défaut dans une étape d'attente en veille, représentée sur la figure 2 par un rectangle à double bordure qui entoure les lettres SM. Les machines A, B, sont intégrées dans une deuxième partie applicative de messagerie ouverte sur les dispositifs 7, 8 où elle sont par défaut dans une étape d'attente en veille, représentée sur la figure 2 par des rectangles à double bordure qui entourent chacun respectivement la lettre A et la lettre B. Les étapes d'attente sont vues ici dans le sens où des utilisateurs 1, 2, utilisent ou n'utilisent pas d'autre services de la messagerie, échanges de texte ou autres et n'interagissent pas avec le procédé qui fait l'objet de l'invention.

La transition 21 est validée lorsque la machine A détecte une désignation de la machine B pour une invitation à un rendez-vous téléphonique. Typiquement dans une application de messagerie instantanée ou de forum où les échanges sont essentiellement textuels, l'utilisateur 1 souhaite communiquer téléphoniquement avec son interlocuteur, l'utilisateur 2 ou avec ceux des utilisateurs en présence qui l'acceptent. Les motivations possibles de l'utilisateur 1 sont nombreuses, il peut vouloir rapprocher le dialogue par la voix sans aller jusqu'à se dévoiler plus loin en communiquant son numéro de téléphone ou sans disposer de système de voix sur IP, il peut vouloir aussi continuer à communiquer tout en se déplaçant grâce à son téléphone sans fil ou à son téléphone mobile, il peut encore vouloir converser avec l'utilisateur 2 vocalement en communiquant simultanément textuellement dans une autre fenêtre de messagerie instantanée avec un troisième interlocuteur. On peut faire confiance aux utilisateurs interagissant avec le procédé selon l'invention, pour faire naître de nombreuses autres motivations. Pour entrer en relation téléphonique avec l'utilisateur 2, l'utilisateur 1 désigne sur son dispositif 7, la machine B que l'utilisateur 2 s'est attribué dans son dispositif 8 au sein de l'application courante. Cette désignation peut se faire en cliquant avec sa souris sur un pictogramme particulier de son écran, en entrant un code spécifique sur son clavier ou de toute autre manière adaptée.

La validation de la transition 21 déclenche l'étape 11 dans laquelle la machine A envoie à la machine SM, un message de la forme "A invite B". Dans une mise en oeuvre la plus simple où la communication téléphonique est prévue de commencer tant que la session de l'application en cours est ouverte, ce message simple suffit. Dans une mise en oeuvre plus élaborée où la communication téléphonique est prévue de commencer à une date ultérieure après fermeture de session de l'application en cours, l'utilisateur 1 saisi de plus une heure, voire une date de rendez-vous à laquelle commencer la communication téléphonique. La machine A concatène alors heure et ou date saisies, dans le message envoyé à la machine SM.

La transition 23 est validée lorsque la machine SM reçoit le message de la forme "A invite B" avec selon le cas la date et l'heure proposée pour le rendez-vous.

La validation de la transition 23 déclenche l'étape 13 dans laquelle la machine SM envoie à la machine B, le message de la forme "A invite B" en lui donnant éventuellement une tournure de langage naturel. Dans la mise en oeuvre la plus simple, ce message simple est transmis tel quel. Dans la mise en oeuvre plus élaborée, la date et ou l'heure de rendez-vous proposés sont intégrés dans une phrase en langage naturel, dans un tableau ou dans toute autre présentation paramétrable.

La transition 27 est validée lorsque la machine B reçoit le message de la forme "A invite B" avec selon le cas la date et l'heure proposée pour le rendez-vous.

La validation de transition 27 déclenche l'étape 17 dans laquelle la machine B signale à l'utilisateur 2, l'invitation de l'utilisateur 1. De nombreux moyens de signalisation peuvent être utilisés, la machine B peut afficher le message reçu sur l'écran du dispositif 8, proclamer une phrase sonore synthétisée sur les haut-parleurs du dispositif 8. Quelle qu'elle soit, la signalisation demande à l'utilisateur 2 de donner son accord au rendez-vous, en écrivant une certaine phrase pré formatée s'il le souhaite, en cochant une case affichée sur l'écran, avec sa souris ou tout simplement en appuyant sur une touche prédéterminée.

La transition 28 est validée positivement lorsque la machine B détecte l'accord de l'utilisateur 2 et validée négativement lorsque la machine B détecte le désaccord exprimé de l'utilisateur 2 ou une absence d'accord dans un délai prédéterminé.

La validation négative de transition 28 déclenche l'étape 18 dans laquelle la machine B envoie un message de refus à la machine SM via le réseau 3.

La validation positive de transition 28 déclenche l'étape 19 dans laquelle la machine B envoie un message d'accord à la machine SM via le réseau 3.

La transition 24 est validée positivement lorsque la machine SM reçoit le message d'accord envoyé par la machine B et validée négativement lorsque la machine SM reçoit le message de refus envoyé par la machine B.

La validation négative de la transition 24 déclenche l'étape 14 dans laquelle la machine SM envoie un message d'excuse à la machine A via le réseau 3.

La validation positive de la transition 24 déclenche l'étape 15 dans laquelle la machine SM lance une procédure de création d'un numéro de téléphone spécifiquement dédié au rendez-vous téléphonique proposé par l'utilisateur 1 et accepté par l'utilisateur 2. Différentes procédures de création sont possibles dont deux sont décrites ultérieurement en référence aux figures 3 et 4. Le numéro dédié étant lié au dialogue des machines A et B via le réseau 3, il est répertorié numéro (A,B) dans une liste d'autres numéros éventuels initiés à partir d'autre machines ou pour d'autres rendez-vous avec alors un indice d'ordre.

La transition 25 est validée lorsque la procédure de création de numéro dédié est terminée, c'est-à-dire qu'un numéro de téléphone spécifique est attribué au rendez-vous téléphonique.

La validation de la transition 25 déclenche l'étape 15 dans laquelle la machine SM envoie un message contenant le numéro de téléphone aux machines A, B des utilisateurs 1, 2 ayant convenu du rendez-vous, via le réseau 3.

La transition 22 est validée lorsque la machine A reçoit le message contenant le numéro envoyé en étape 15 ou le message d'excuse envoyé en étape 14.

La validation de la transition 22 déclenche l'étape 12 dans laquelle la machine A affiche le message reçu de sorte que l'utilisateur 1 peut prendre connaissance selon le cas, du refus de l'utilisateur 2 ou du numéro dédié qui confirme l'accord de l'utilisateur 2.

La transition 29 est validée lorsque la machine B reçoit le message contenant le numéro envoyé en étape 15.

La validation de la transition 29 déclenche l'étape 20 dans laquelle la machine B affiche le message reçu de sorte que l'utilisateur 2 peut prendre connaissance du numéro dédié.

Le procédé décrit pour deux utilisateurs, est généralisable à plusieurs utilisateurs sans difficulté particulière, pour participer simultanément à un même rendez-vous téléphonique proposé par l'un d'eux. La machine B est dupliquée en autant de machines C que d'utilisateurs invités. L'étape 14 dans la machine SM, est déclenchée autant de fois qu'un utilisateur de dispositif 8 refuse, le message d'excuse indique alors un nom ou pseudonyme de l'utilisateur à l'origine de refus. L'étape 15 est déclenchée dès qu'un utilisateur de dispositif 8 accepte. L'étape 15 comptabilise aussi chaque machine C qui envoie un accord de façon à envoyer en étape 16, le numéro dédié à chaque machine qui envoie un message d'accord et de façon à mémoriser le nombre d'utilisateurs sensés appeler le numéro dédié pour participer à ce qu'il convient de nommer une conférence téléphonique. Les variantes possibles sont nombreuses comme celle pour un utilisateur invité de proposer d'adjoindre une autre personne, les messages transmis sur le réseau 3, étant alors enrichis en conséquence. Le message de transmission du numéro de téléphone dédié peut par exemple être prévu pour contenir des noms ou pseudonymes de personnes ayant donné leur accord dans le cadre du procédé et de personnes désignées par celles-ci et auxquelles elles transmettront le numéro dédié d'autre manière. Le message émis en étape 19 serait du style "d'accord avec X".

En référence aux figures 3 et 4, la transition 26 est validée dans la machine SM en début de procédure de création d'un numéro dédié, c'est-à-dire par le déclenchement de l'étape 15.

En référence à la figure 3, la validation de la transition 26 déclenche une étape 30 dans laquelle la machine SM génère le numéro dédié et envoie un message contenant le numéro généré à une machine COM qui est active dans le commutateur téléphonique 6. Le numéro de téléphone est généré dans un format compatible avec le commutateur téléphonique, c'est par exemple une extension à six chiffres au numéro de téléphone qui permet d'appeler le commutateur téléphonique sur le réseau 5. La fin de l'étape 30 valide la transition 25.

La transition 31 est validée lorsque la machine COM reçoit le message contenant le numéro dédié ainsi que, de façon avantageuse, le nombre d'utilisateurs prévus de se connecter à ce numéro.

La validation de la transition 31, déclenche une étape 32 dans laquelle la machine COM gère la validité du numéro dédié. Si dans le mode de réalisation le plus simple, il est prévu que les utilisateurs appellent le numéro dédié en cours de session de leur application de messagerie, la validité du numéro est assurée pendant une durée prédéterminée ou jusqu'à révocation par la machine SM qui détecte une fin de session.

En référence à la figure 4, la validation de la transition 26 déclenche une étape 33 dans laquelle la machine SM génère une requête à destination de la machine COM qui est active dans le commutateur téléphonique 6 de façon à obtenir un numéro de téléphone pour un nombre d'utilisateurs définis prévus de se connecter à ce numéro.

La transition 34 est validée lorsque la machine COM reçoit la requête de numéro de téléphone.

La validation de la transition 34, déclenche une étape 35 dans laquelle la machine COM génère le numéro dédié de façon semblable à ce que ferait la machine SM en étape 30, en le retirant d'une liste de numéros ou en le produisant de façon aléatoire et en vérifiant son unicité. La machine COM gère la validité du numéro dédié comme en étape 32. La machine COM envoie le numéro dédié ainsi généré à la machine SM dans un message sur le réseau 3. La réception de ce message par la machine SM, valide la transition 25.

En référence à la figure 5, une transition 36 est validée lorsque la machine COM détecte un appel du commutateur 6 par un premier appelant Z. Le premier appelant est indifféremment originaire de l'appareil téléphonique 9 ou de l'appareil téléphonique 10 sur lequel l'utilisateur 1 ou respectivement l'utilisateur 2 a composé un numéro codé dont les premiers chiffres adressent le commutateur 6 sur le réseau 5.

La validation de la transition 36 déclenche une étape 37 dans la quelle la machine COM vérifie une correspondance du numéro codé avec un numéro dédié valable. De façon à éviter des utilisations de numéros dédiés non souhaitées, chaque numéro dédié est valable uniquement dans une plage temporelle à laquelle appartient la date et ou l'heure prévue de rendez-vous téléphonique.

Une transition 38 est validée s'il n'existe pas de numéro dédié valable qui correspond au numéro codé au moment où celui-ci est reçu.

La validation de la transition 38, déclenche une étape 39 dans laquelle la machine COM envoie un message d'excuse vers l'appelant Z.

Une transition 40 est validée s'il existe un numéro dédié valable qui correspond au numéro codé au moment où celui-ci est reçu.

La validation de la transition 40, déclenche une étape 41 dans laquelle la machine COM envoie un message d'attente vers l'appelant Z.

Une transition 42 est validée si le numéro dédié n'est pas appelé à nouveau dans un délai compatible avec la plage temporelle.

La validation de la transition 42, déclenche l'étape 39 dans laquelle la machine COM envoie un autre message d'excuse vers le premier appelant Z. Le numéro dédié est alors grillé, au moins pour une certaine durée, de façon à ne plus être malencontreusement utilisé.

Une transition 43 est validée lorsque la machine COM détecte un appel du commutateur 6 par un deuxième appelant Y. Le deuxième appelant est originaire de l'autre appareil téléphonique 9, 10 sur lequel l'utilisateur 1 ou respectivement l'utilisateur 2 a composé un numéro codé qui correspond au numéro dédié.

La validation de la transition 43, déclenche une étape 44 dans la quelle la machine COM connecte les deux demi appels en provenance des appelants Z, Y de façon à établir la communication téléphonique entre les appelants. On remarque que les utilisateurs 1, 2 ont pu ainsi entrer en communication vocale sans avoir eu à échanger leurs numéros personnels mais simplement en appelant un numéro commun qui leur a été attribué et communiqué de manière automatique. Dès que la machine COM détecte que le nombre prévu d'interlocuteurs est entré en communication, le numéro dédié est grillé de façon à ne plus être malencontreusement utilisé, par exemple pour éviter qu'un interlocuteur ne s'introduise volontairement ou involontairement dans la conversation téléphonique.

Une transition 45 est validée lorsque la machine COM détecte qu'il ne reste plus qu'un interlocuteur Y ou Z en ligne.

La validation de la transition 45, déclenche une étape 46 dans la quelle la machine COM ferme la connexion téléphonique.

On comprendra que l'invention ne se limite pas au seul exemple de mise en oeuvre précédemment décrit plus particulièrement adapté à une application de messagerie instantanée. L'invention peut aussi avantageusement être mise en oeuvre par exemple au sein d'une application de messagerie électronique.

Supposons un utilisateur 1 qui veut convier un ou plusieurs autres utilisateurs 2 à un rendez-vous ou à une conférence téléphonique. Par l'étape 11, il envoie un message électronique (e-mail ou SMS) en parallèle à chacun des autres utilisateurs. Ce message électronique passant par le serveur de messagerie, celui-ci y détecte une invitation à réunion téléphonique. Dans le ou les messages électroniques de réponse (e-mail ou SMS), le serveur de messagerie y détecte les accords et les refus. Si le serveur de messagerie détecte au moins un accord, il envoie un message électronique à chaque utilisateur acceptant de participer à la réunion téléphonique, un message électronique (e-mail ou SMS) dans lequel est placé le numéro de téléphone dédié avec date et heure convenue du rendez-vous. Ainsi chaque utilisateur participant à la conversation téléphonique par rendez-vous, peut s'y brancher au moyen de tout appareil téléphonique sans avoir à en dévoiler les coordonnées. Ceci peut être intéressant pour des réunions professionnelles auxquelles on est amené à participer depuis son domicile.

## Revendications

1. Procédé de mise en relation téléphonique directe d'au moins deux personnes sans qu'aucune de ces personnes n'ait à donner ses coordonnées téléphoniques, ledit procédé comprenant:
- une étape de demande de mise en relation téléphonique avec une personne invitée, auprès d'un serveur de messagerie, à l'initiative d'au moins une desdites personnes, dite personne invitante,
- une étape (15) de création automatique, au niveau du serveur de messagerie, d'un numéro dédié à une communication téléphonique,
- une étape (16) de diffusion par le serveur de messagerie du numéro dédié aux deux personnes,
- une étape (44) de connexion d'au moins deux appels au numéro dédié,
ledit procédé étant **caractérisé en ce que** ladite étape de demande de mise en relation téléphonique comprend:
• la sélection par la personne invitante, via un dispositif connecté au serveur de messagerie (4), de ladite personne invitée, ou de plusieurs autres personnes invitées en sus de ladite personne invitée, chaque personne invitée détenant un dispositif qui est apte à communiquer avec le dispositif (7) de la personne invitante, via le serveur de messagerie,
• l'émission, en direction du serveur de messagerie, d'un message contenant une invitation à communiquer par téléphone avec la ou les personnes invitées, que le dispositif de la ou de chacune des personnes invitées communique ou non avec le dispositif (7) de la personne invitante, via le serveur de messagerie (4),
• la transmission dudit message, depuis le serveur de messagerie (4) vers le dispositif de la ou des personnes invitées;
• la signalisation dudit message transmis sur le dispositif de la ou des personnes invitées consistant à demander l'accord de la ou des personnes invitées sur la mise en relation téléphonique demandée, préalablement au déclenchement de ladite étape de création automatique d'un numéro dédié à une communication téléphonique.

2. Procédé selon la revendication 1, **caractérisé en ce que** la connexion d'au moins deux appels au numéro dédié, est contrôlée par une validité du numéro dédié dans une plage de temps prédéterminée.

3. Procédé selon l'une des revendications 1 ou 2, **caractérisé en ce que** le numéro dédié est grillé après utilisation.

4. Système de mise en relation téléphonique directe d'au moins deux personnes sans qu'aucune de ces personnes n'ait à donner ses coordonnées téléphoniques, ledit système comprenant :
- un serveur de messagerie (4) comportant :
• des moyens de réception d'une demande à l'initiative d'une desdites personnes, dite personne invitante, de mise en relation téléphonique avec une personne invitée,
• des moyens de création automatique d'un numéro dédié à une communication téléphonique,
• des moyens de diffusion du numéro dédié aux deux personnes,
- un commutateur (6) agencé pour connecter au moins deux appels au numéro dédié,
ledit système étant **caractérisé en ce qu'**il comprend un dispositif (7) détenu par la personne invitante et comprenant :
• des moyens de sélection de ladite personne invitée, ou de plusieurs autres personnes invitées en sus de ladite personne invitée, chaque personne invitée détenant un dispositif qui est apte communiquer avec le dispositif (7) de la personne invitante, via le serveur de messagerie,
• des moyens d'émission, en direction du serveur de messagerie, d'un message contenant une invitation à communiquer par téléphone avec la ou les personnes invitées, que le dispositif de la ou de chacune des personnes invitées communique ou non avec le dispositif (7) de la personne invitante, via le serveur de messagerie (4),
- **en ce que** le serveur de messagerie (4) comprend des moyens de transmission dudit message émis vers le dispositif de la ou des personnes invitées,
- et **en ce que** le dispositif de la ou des personnes invitées comprend des moyens de signalisation dudit message transmis pour demander l'accord de la ou des personnes invitées sur la mise en relation téléphonique demandée, préalablement à l'activation des moyens de création automatique d'un numéro dédié à une communication téléphonique.

5. Système selon la revendication 4, **caractérisé en ce que** le commutateur (6) est agencé pour contrôler la connexion d'au moins deux appels au numéro dédié, en fonction d'une validité du numéro dédié dans une plage de temps prédéterminée.

6. Système selon l'une des revendications 4 ou 5, **caractérisé en ce que** le commutateur (6) est agencé pour griller le numéro dédié après utilisation.

## Claims

1. Method of direct telephonic connection of at least two persons without either of these persons having to give his telephone particulars, said method comprising:
- a step of requesting, from a messaging server, telephonic connection with an invited person, on the initiative of at least one of said persons, termed the inviting person,
- a step (15) of automatic creation, at the level of the messaging server, of a number dedicated to a telephone communication,
- a step (16) of broadcasting by the messaging server of the dedicated number to the two persons,
- a step (44) of connecting at least two calls to the dedicated number,
said method being **characterized in that** said step of requesting telephonic connection comprises:
• the selection by the inviting person, via a device connected to the messaging server (4), of said invited person, or of several other invited persons in addition to said invited person, each invited person owning a device which is able to communicate with the device (7) of the inviting person, via the messaging server,
• the sending, towards the messaging server, of a message containing an invitation to communicate by telephone with the invited person or persons, whether or not the device of the or of each of the invited persons is communicating with the device (7) of the inviting person, via the messaging server (4),
• the transmission of said message, from the messaging server (4), to the device of the invited person or persons;
• the signalling of said message transmitted on the device of the invited person or persons consisting in requesting the agreement of the invited person or persons regarding the telephonic connection requested, prior to the triggering of said step of automatic creation of a number dedicated to a telephone communication.

2. Method according to Claim 1, **characterized in that** the connection of at least two calls to the dedicated number is controlled by a validity of the dedicated number in a predetermined time span.

3. Method according to one of Claims 1 or 2, **characterized in that** the dedicated number is disabled after use.

4. System for direct telephonic connection of at least two persons without either of these persons having to give his telephone particulars, said system comprising:
- a messaging server (4) comprising:
• means for receiving a request on the initiative of one of said persons, termed the inviting person, for telephonic connection with an invited person,
• means for automatically creating a number dedicated to a telephone communication,
• means for broadcasting the dedicated number to the two persons,
- a switch (6) devised so as to connect at least two calls to the dedicated number,
said system being **characterized in that** it comprises a device (7) owned by the inviting person and comprising:
• means for selecting said invited person, or several other invited persons in addition to said invited person, each invited person owning a device which is able to communicate with the device (7) of the inviting person, via the messaging server,
• means for sending, towards the messaging server, a message containing an invitation to communicate by telephone with the invited person or persons, whether or not the device of the or of each of the invited persons is communicating with the device (7) of the inviting person, via the messaging server (4),
- **in that** the messaging sever (4) comprises means for transmitting said message sent to the device of the invited person or persons,
- and **in that** the device of the invited person or persons comprises means for signalling said message transmitted so as to request the agreement of the invited person or persons regarding the telephone connection requested, prior to the activation of the means for automatically creating a number dedicated to a telephone communication.

5. System according to Claim 4, **characterized in that** the switch (6) is devised to control the connection of at least two calls to the dedicated number, as a function of a validity of the dedicated number in a predetermined time span.

6. System according to one of Claims 4 or 5, **characterized in that** the switch (6) is devised to disable the dedicated number after use.

## Patentansprüche

1. Verfahren zum Aufbau einer direkten telefonischen Verbindung von mindestens zwei Personen, ohne dass eine dieser Personen ihre Telefondaten angeben muss, wobei das Verfahren enthält:
- einen Schritt der Anforderung eines Aufbaus einer telefonischen Verbindung mit einer eingeladenen Person bei einem Mail-Server auf Initiative mindestens einer der Personen, einladende Person genannt,
- einen Schritt (15) der automatischen Erzeugung einer für eine Telefonverbindung spezifischen Nummer im Mail-Server,
- einen Schritt (16) der Übermittlung der spezifischen Nummer an die zwei Personen durch den Mail-Server,
- einen Schritt (44) der Verbindung von mindestens zwei Anrufen mit der spezifischen Nummer,
wobei das Verfahren **dadurch gekennzeichnet ist, dass** der Schritt der Anforderung des Aufbaus einer telefonischen Verbindung enthält:
• die Auswahl, durch die einladende Person, über eine mit dem Mail-Server (4) verbundene Vorrichtung, der eingeladenen Person oder von mehreren anderen eingeladenen Personen zusätzlich zur eingeladenen Person, wobei jede eingeladene Person über eine Vorrichtung verfügt, die mit der Vorrichtung (7) der einladenden Person über den Mail-Server in Verbindung treten kann,
• das Senden, an den Mail-Server, einer Mitteilung, die eine Einladung enthält, telefonisch mit der oder den eingeladene(n) Person oder Personen in Verbindung zu treten, unabhängig davon, ob die Vorrichtung der oder jeder der eingeladenen Personen mit der Vorrichtung (7) der einladenden Person über den Mail-Server (4) in Verbindung steht oder nicht,
• die Übertragung der Mitteilung vom Mail-Server (4) an die Vorrichtung der eingeladenen Person oder Personen;
• die Anzeige der übertragenen Mitteilung auf der Vorrichtung der eingeladenen Person oder Personen, die darin besteht, die Zustimmung der eingeladenen Person oder Personen zur angeforderten Telefonverbindung vor dem Auslösen des Schritts der automatischen Erzeugung einer für eine Telefonverbindung spezifischen Nummer anzufordern.

2. Verfahren nach Anspruch 1, **dadurch gekennzeichnet, dass** die Verbindung von mindestens zwei Anrufen mit der spezifischen Nummer durch eine Gültigkeit der spezifischen Nummer in einem vorbestimmten Zeitbereich geregelt wird.

3. Verfahren nach einem der Ansprüche 1 oder 2, **dadurch gekennzeichnet, dass** die spezifische Nummer nach Verwendung vernichtet wird.

4. System zum Aufbau einer direkten telefonischen Verbindung zwischen mindestens zwei Personen, ohne dass eine dieser Personen ihre Telefondaten angeben muss, wobei das System enthält:
- einen Mail-Server (4), der aufweist:
• Einrichtungen zum Empfang, auf Initiative einer der Personen, einladende Person genannt, einer Anforderung zur telefonischen Verbindung mit einer eingeladenen Person,
• Einrichtungen zur automatischen Erzeugung einer für eine Telefonverbindung spezifischen Nummer,
• Einrichtungen zur Übermittlung der spezifischen Nummer an die zwei Personen,
- einen Schalter (6), der eingerichtet ist, um mindestens zwei Anrufe mit der spezifischen Nummer zu verbinden,
wobei das System **dadurch gekennzeichnet ist, dass** es eine Vorrichtung (7) enthält, über die die einladende Person verfügt und die enthält:
• Einrichtungen zur Auswahl der eingeladenen Person oder von mehreren anderen eingeladenen Personen zusätzlich zur eingeladenen Person, wobei jede eingeladene Person über eine Vorrichtung verfügt, die mit der Vorrichtung (7) der einladenden Person über den Mail-Server in Verbindung treten kann,
• Einrichtungen zum Senden einer Mitteilung an den Mail-Server, die eine Einladung enthält, über das Telefon mit der oder den eingeladene(n) Person oder Personen in Verbindung zu treten, unabhängig davon, ob die Vorrichtung der oder jeder der eingeladenen Personen mit der Vorrichtung (7) der einladenden Person über den Mail-Server (4) in Verbindung steht oder nicht,
- dass der Mail-Server (4) Einrichtungen zur Übertragung der gesendeten Mitteilung an die Vorrichtung der eingeladenen Person oder Personen enthält,
- und dass die Vorrichtung der eingeladenen Person oder Personen Einrichtungen zur Anzeige der übertragenen Mitteilung enthält, um die Zustimmung der eingeladenen Person oder Personen zum angeforderten Aufbau einer telefonischen Verbindung vor der Aktivierung der Einrichtungen zur automatischen Erzeugung einer für eine Telefonverbindung spezifischen Nummer anzufordern.

5. System nach Anspruch 4, **dadurch gekennzeichnet, dass** der Schalter (6) eingerichtet ist, um die Verbindung von mindestens zwei Anrufen mit der spezifischen Nummer in Abhängigkeit von einer Gültigkeit der spezifischen Nummer im einem gegebenen Zeitbereich zu regeln.

6. System nach einem der Ansprüche 4 oder 5, **dadurch gekennzeichnet, dass** der Schalter (6) eingerichtet ist, um die spezifische Nummer nach Verwendung zu vernichten.
